# EUROPEAN PATENT APPLICATION

(11) **EP 2 999 131 A1**
(43) Date of publication of application: **23.03.2016**
(21) Application number: 15185725.7
(22) Date of filing: 17.09.2015
(51) Int. Cl.: H04B 5/00, H02J 5/00, H02J 7/02

(54) **ELECTRONIC APPARATUS AND POWER SUPPLY APPARATUS**

(30) Priority: 22.09.2014 JP 2014192877
(71) Applicant: CANON KABUSHIKI KAISHA, Ohta-ku Tokyo 146-8501 (JP)
(72) Inventor: NAKANO, Katsuya, Ohta-ku, Tokyo (JP)
(74) Representative: Walker, Philip Martin

(57) **Abstract**

An electronic apparatus includes a control unit that updates information regarding the electronic apparatus, and a communication unit that transmits, to a power supply apparatus, data for notifying the power supply apparatus whether the electronic apparatus is in a state capable of updating the information regarding the electronic apparatus.

## Description

### BACKGROUND OF THE INVENTION

### Field of the Invention

The present invention relates to an electronic apparatus that communicates with an external apparatus (including a power supply apparatus).

### Description of the Related Art

In recent years, there has been known a power supply system that wirelessly transmits power without a connection using a connector.

There has been known, in this type of power supply system, a power supply apparatus that performs data communication for transmitting a command to an electronic apparatus and transmitting power to the electronic apparatus via a same antenna (see Japanese Patent Application Laid-Open No. 2008-113519).

In this type of power supply system, there is a demand for allowing the power supply apparatus to control, with use of a state of the electronic apparatus, power to be supplied from the power supply apparatus to the electronic apparatus. In this case, the electronic apparatus needs to periodically detect its own state, and notify the power supply apparatus of a result of this detection.

However, in some cases, the power supply apparatus cannot determine whether information notified from the electronic apparatus is correct. In such cases, the power supply apparatus may control power to be supplied from the power supply apparatus to the electronic apparatus with use of information notified from the electronic apparatus, even when the information notified from the electronic apparatus is incorrect.

### SUMMARY OF THE INVENTION

According to an aspect of the present invention, there is provided a power supply apparatus capable of determining whether information regarding an electronic apparatus notified from the electronic apparatus to the power supply apparatus is correct.

According to an aspect of the present invention, there is provided a power supply apparatus capable of appropriately controlling power to be supplied from the power supply apparatus to an electronic apparatus.

According to a first aspect of the present invention, there is provided an electronic apparatus as specified in any one of claims 1 to 6. According to a second aspect of the present invention, there is provided a power supply apparatus as specified in any one of clams 7 to 9.

Further features and aspects of the present invention will become apparent from the following description of exemplary embodiments.

### BRIEF DESCRIPTION OF THE DRAWINGS

The drawings, which are incorporated in and constitute a part of the specification, illustrate exemplary embodiments, features, and aspects of the present invention.
Fig. 1 illustrates an example of a power supply system according to a first exemplary embodiment.
Fig. 2 is a block diagram illustrating an example of a power supply apparatus according to the first exemplary embodiment.
Fig. 3 is a block diagram illustrating an example of an electronic apparatus according to the first exemplary embodiment.
Fig. 4 is a flowchart illustrating an example of a first notification process performed by the electronic apparatus according to the first exemplary embodiment.
Fig. 5 is a flowchart illustrating an example of a second notification process performed by the electronic apparatus according to the first exemplary embodiment.
Fig. 6 is a flowchart illustrating an example of a power supply process performed by the power supply apparatus according to the first exemplary embodiment.

### DESCRIPTION OF THE EMBODIMENTS

Exemplary embodiments, features, and aspects of the present invention will be described below with reference to the drawings.

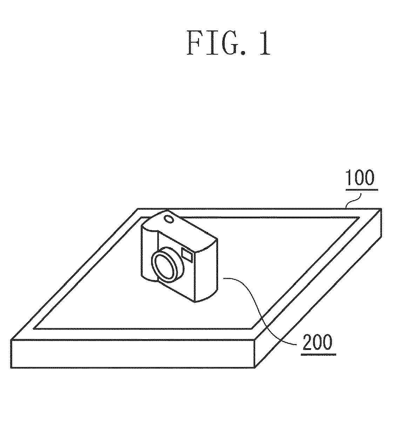

In the following description, a first exemplary embodiment will be described in detail with reference to the drawings. As illustrated in Fig. 1, a power supply system according to the first exemplary embodiment includes a power supply apparatus 100 and an electronic apparatus 200. In the power supply system according to the first exemplary embodiment, the power supply apparatus 100 wirelessly supplies power to the electronic apparatus 200 if the electronic apparatus 200 is located within a predetermined range. Furthermore, the electronic apparatus 200 wirelessly receives power output from the power supply apparatus 100 if located within the predetermined range. On the other hand, the electronic apparatus 200 cannot receive power from the power supply apparatus 100 if not located within the predetermined range. The predetermined range is defined to be a range that allows the power supply apparatus 100 and the electronic apparatus 200 to communicate with each other. Furthermore, the power supply apparatus 100 may wirelessly supply power to electronic apparatuses.

The electronic apparatus 200 may be an image capture apparatus, such as a camera, or may be a reproduction apparatus that reproduces audio data and image data. Alternatively, the electronic apparatus 200 may be a communication apparatus, such as a mobile phone and a smartphone. Alternatively, the electronic apparatus 200 may be a battery pack including a battery 209. Alternatively, the electronic apparatus 200 may be an apparatus such as a vehicle that is driven by power supplied from the power supply apparatus 100. Alternatively, the electronic apparatus 200 may be an apparatus that receives a television broadcast, a display that displays image data, or a personal computer. Furthermore, the electronic apparatus 200 may be an apparatus that operates with use of power supplied from the power supply apparatus 100 even without the battery 209 mounted thereon.

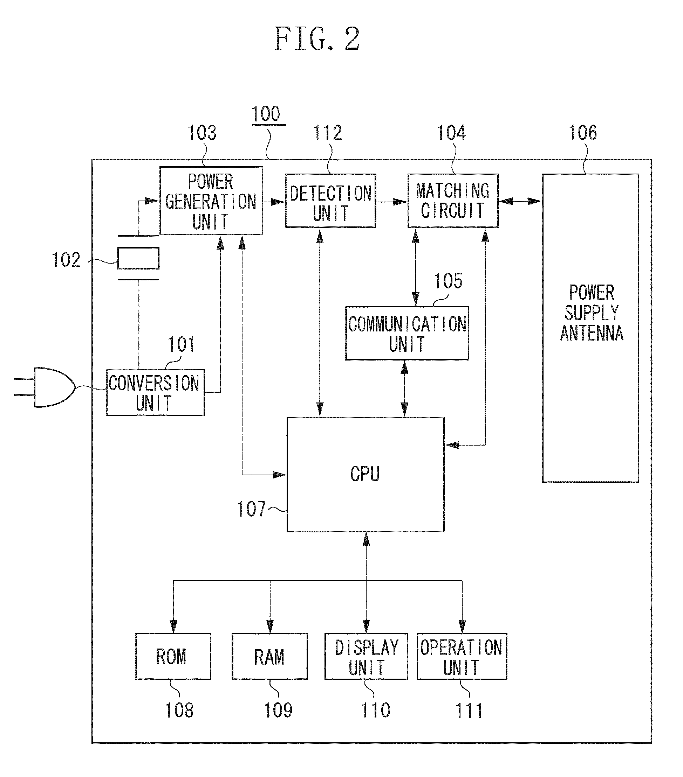

Fig. 2 is a block diagram illustrating an example of a configuration of the power supply apparatus 100. As illustrated in Fig. 2, the power supply apparatus 100 includes a conversion unit 101, an oscillator 102, a power generation unit 103, a matching circuit 104, a communication unit 105, a power supply antenna 106, a central processing unit (CPU) 107, a read only memory (ROM) 108, a random access memory (RAM) 109, a display unit 110, an operation unit 111, and a detection unit 112.

In a case where an alternating-current (AC) power source and the power supply apparatus 100 are connected to each other, the conversion unit 101 converts alternating-current power supplied from the AC power source into direct-current power, and supplies the converted direct-current power to the power supply apparatus 100.

The oscillator 102 produces a frequency signal that is used to control the power generation unit 103 so as to convert power supplied from the conversion unit 101 into target power set by the CPU 107. A crystal oscillator or the like is used as the oscillator 102.

The power generation unit 103 generates power to be output to the outside via the power supply antennal 106 based on power supplied from the conversion unit 101 and the frequency signal produced by the oscillator 102. The power generated by the power generation unit 103 is supplied to the matching circuit 104 via the detection unit 112.

The power generated by the power generation unit 103 includes first power and second power. The first power is power that is used for the communication unit 105 to communicate with the electronic apparatus 200 via the power supply antenna 106. The second power is power that is used for the electronic apparatus 200 to charge the battery 209 and perform a predetermined process. For example, the first power is power of 1 W or lower, and the second power is power of 2 W or higher. The first power is defined to be power lower than the second power. Furthermore, the first power may be power specified in a communication standard of the communication unit 105. Furthermore, the first power is not limited to the power of 1 W or lower. Furthermore, the second power is not limited to the power of 2 W or higher as long as the second power is power usable to allow the electronic apparatus 200 to charge the battery 109 and perform the predetermined process.

The matching circuit 104 is a resonance circuit for achieving resonance between the power supply antenna 106 and a power reception antenna 201 of the electronic apparatus 200. Furthermore, the matching circuit 104 includes a circuit for achieving impedance matching between the power generation unit 103 and the power supply antennal 106. The matching circuit 104 includes an inductor and a capacitor.

In a case where the power supply apparatus 100 outputs any one of the first power and the second power, the CPU 107 controls the matching circuit 104 so as to set a resonance frequency f of the power supply antenna 106 to a predetermined frequency to achieve the resonance between the power supply antenna 106 and the power reception antenna 201. At this time, the CPU 107 changes the resonance frequency f of the power supply antenna 106 by controlling a value of an inductance included in the matching circuit 104 and a value of the capacitor included in the matching circuit 104. Assume that the predetermined frequency is, for example, a frequency of 13.56 MHz.

The communication unit 105 performs, for example, close proximity wireless communication based on NFC (Near Filed Communication) standard defined by the NFC forum. In a case where the first power is output from the power supply antenna 106, the communication unit 105 can transmit and receive data for carrying out the wireless power supply with the electronic apparatus 200 via the power supply antenna 106. However, assume that the communication unit 105 does not communicate with the electronic apparatus 200 via the power supply antenna 106 while the second power is output from the power supply antenna 106. In a case where the first power is output from the power supply antenna 106, the communication unit 105 transmits the data to the electronic apparatus 200 by superposing data onto the first power. In a case where transmitting the data to the power supply apparatus 100, the electronic apparatus 200 modulates a load inside the electronic apparatus 200, which causes a change in a current flowing in the power supply antenna 106. Therefore, the communication unit 105 can receive the data from the electronic apparatus 200 by detecting the current flowing in the power supply antenna 106, and analyzing that.

The data transmitted between the communication unit 105 and the electronic apparatus 200 is data in compliance with NFC Data Exchange Format (NDEF).

The power supply antenna 106 is an antenna for outputting power generated by the power generation unit 103 to the outside. The power supply apparatus 100 supplies power to the electronic apparatus 200 via the power supply antenna 106, and transmits the data to the electronic apparatus 200 via the power supply antenna 106. Furthermore, the power supply apparatus 100 receives the data from the electronic apparatus 200 via the power supply antenna 106.

The CPU 107 controls the power supply apparatus 100 by executing a computer program stored in the ROM 108. The CPU 107 controls power to be supplied to the electronic apparatus 200 by controlling the power generation unit 103.

The ROM 108 stores information such as the computer program for controlling the power supply apparatus 100, and a parameter regarding the power supply apparatus 100.

The RAM 109 records the data acquired from the electronic apparatus 200 by the communication unit 105.

The display unit 110 displays image data provided from any one of the RAM 109 and the ROM 108. Furthermore, the display unit 110 displays a warning toward a user.

The operation unit 111 provides a user interface for operating the power supply apparatus 100. The operation unit 111 includes a power button of the power supply apparatus 100, a mode switching button of the power supply apparatus 100, and the like. Each of the buttons is constituted by a switch, a touch panel, or the like. The CPU 107 controls the power supply apparatus 100 according to an input signal input via the operation unit 111.

The detection unit 112 detects a voltage standing wave ratio (VSWR) to detect a resonance state between the power supply apparatus 100 and the electronic apparatus 200. Furthermore, the detection unit 112 provides data indicating the detected VSWR to the CPU 107. The VSWR is a value indicating a relationship between a traveling wave of power output from the power supply antenna 106 and a reflection wave of power output from the power supply antenna 106. The CPU 107 can detect whether an object is placed in the vicinity of the power supply apparatus 100 with use of the data indicating the VSWR that is provided from the detection unit 112.

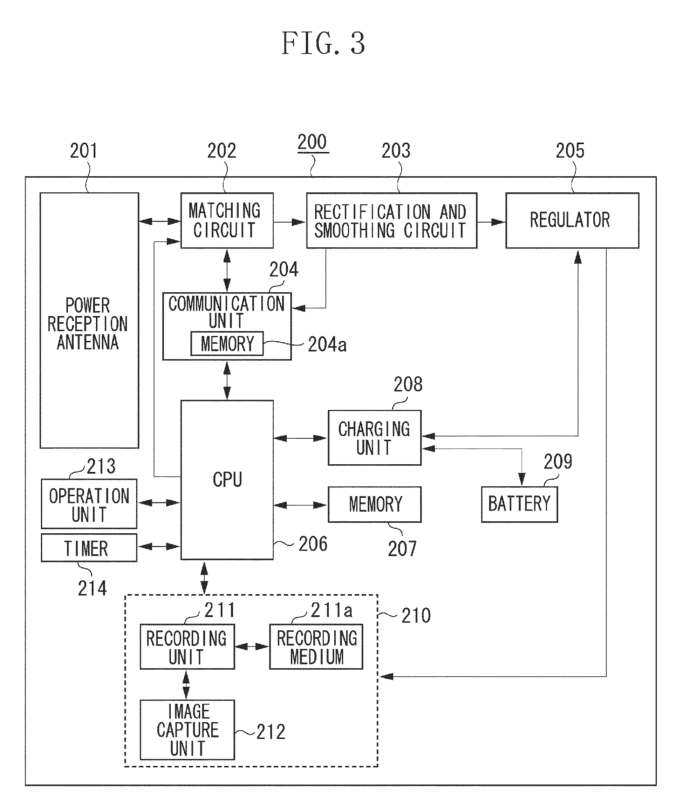

Next, an example of a configuration of the electronic apparatus 200 will be described with reference to Fig. 3. The electronic apparatus 200 includes the power reception antenna 201, a matching circuit 202, a rectification and smoothing circuit 203, a communication unit 204, a regulator 205, a CPU 206, and a memory 207. Furthermore, the electronic apparatus 200 includes a charging unit 208, the battery 209, a system 210, an operation unit 213, and a timer 214.

The power reception antenna 201 is an antenna for receiving power supplied from the power supply apparatus 100. The electronic apparatus 200 receives power from the power supply apparatus 100 via the power reception antenna 201. Furthermore, the electronic apparatus 200 wirelessly communicates with the power supply apparatus 100 via the power reception antenna 201.

The matching circuit 202 is a resonance circuit for achieving the resonance between the power supply antenna 106 and the power reception antenna 201 according to a frequency equal to the resonance frequency f of the power supply antenna 106. Furthermore, the matching circuit 202 includes a circuit for achieving impedance matching between the power reception antenna 201 and the rectification and smoothing circuit 203. The matching circuit 202 includes an inductor and a capacitor. The CPU 206 controls a value of the inductor and a value of the capacitor included in the matching circuit 202 so as to cause the power reception antenna 201 to oscillate with the frequency equal to the resonance frequency f of the power supply antenna 106. Furthermore, the matching circuit 202 supplies power received by the power reception antenna 201 to the rectification and smoothing circuit 203.

The rectification and smoothing circuit 203 removes the data and a noise from power supplied from the matching circuit 202, and generates direct-current power. Furthermore, the rectification and smoothing circuit 203 supplies the generated direct-current power to the regulator 205. The rectification and smoothing circuit 203 provides the data removed from power received by the power reception antenna 201 to the communication unit 204.

The communication unit 204 wirelessly communicates with an external apparatus, such as the power supply apparatus 100, according to the same communication standard as the communication unit 105. The communication unit 204 analyzes the data provided from the rectification and smoothing circuit 203, and provides a result of the analysis of the data to the CPU 206. In a case where the first power is supplied from the power supply apparatus 100 to the electronic apparatus 200, the CPU 206 transmits response data as a response to the received data to the power supply apparatus 100. At this time, the CPU 206 controls the communication unit 204 so as to change a load included in the communication unit 204 to transmit the response data as the response to the received data to the power supply apparatus 100. The communication unit 204 includes a memory 204a. Status information regarding the electronic apparatus 200 is stored in the memory 204a as the data to be transmitted to the power supply apparatus 100. The status information includes first data, which is fixed data, second data, which varies according to a state of the electronic apparatus 200, and update data. The status information is data in compliance with NDEF.

The first data includes information for identifying the electronic apparatus 200, information indicating a power supply method that the electronic apparatus 200 supports, information indicating a maximum value of the power that the electronic apparatus 200 can receive, and the like. The first data is stored in the memory 204a in advance. The second data includes remaining capacity information indicating a remaining capacity of the battery 209, charging information regarding charging of the battery 209, request information indicating a value of power that the electronic apparatus 200 requests to the power supply apparatus 100, power reception information indicating power received from the power supply apparatus 100 by the power reception antenna 201, and the like. The second data is updated by the CPU 206.

The update data is information indicating whether the second data is updated by the CPU 206. The update data is, for example, data of one bit. Upon completing the update of the second data, the CPU 206 changes the update data. For example, if the update data is set to "0", the CPU 206 changes the update data from "0" to "1" after completing the update of the second data. Furthermore, for example, if the update data is set to "1", the CPU 206 changes the update data from "1" to "0" after completing the update of the second data. The CPU 206 does not change the update data until completing the update of the second data. Therefore, if the update data is set to "1", the update data remains set to "1" without being changed to "0" when the CPU 206 cannot update the second data.

The communication unit 204 consumes power lower than the CPU 206. The communication unit 204 can communicate with the communication unit 105 with use of power received from the power supply apparatus 100 by the power reception antenna 201 while the first power is output from the power supply apparatus 100.

The regulator 205 performs control so as to supply power supplied from any one of the rectification and smoothing circuit 203 and the battery 209 to the electronic apparatus 200. The regulator 205 supplies power supplied from the power supply apparatus 100 via the rectification and smoothing circuit 203 to the electronic apparatus 200 according to an instruction from the CPU 206. The regulator 205 supplies discharged power supplied from the battery 209 via the charging unit 208 to the electronic apparatus 200 according to an instruction from the CPU 206.

The CPU 206 controls the electronic apparatus 200 according to the result of the analysis of the data provided from the communication unit 204. Furthermore, the CPU 206 controls the electronic apparatus 200 by executing a computer program stored in the memory 207.

The CPU 206 generates the power reception information by detecting the direct-current power generated by the rectification and smoothing circuit 203, deletes the power reception information stored in the memory 204a, and then stores the newly generated power reception information into the memory 204a. With this operation, the CPU 206 updates the power reception information included in the second data.

The CPU 206 generates the request information by detecting power required for the electronic apparatus 200 according to the state of the electronic apparatus 200 and the remaining capacity of the battery 209, deletes the request information stored in the memory 204a, and then stores the newly generated request information into the memory 204a. With this operation, the CPU 206 updates the request information included in the second data.

The memory 207 stores the computer program for controlling the electronic apparatus 200. Furthermore, the memory 207 records information regarding the electronic apparatus 200, and the like.

The charging unit 208 charges the battery 209 with use of power supplied from the regulator 205. Furthermore, in a case where power is not supplied from the regulator 205, the charging unit 208 supplies the discharged power supplied from the battery 209 to the regulator 205. The charging unit 208 periodically detects the remaining capacity information and the charging information, and notifies the CPU 206 of the detected information. The CPU 206 deletes the remaining capacity information and the charging information stored in the memory 204a, and then newly stores the remaining capacity information and the charging information provided from the charging unit 208 into the memory 204a. With this operation, the CPU 206 updates the remaining capacity information and the charging information included in the second data.

The battery 209 is a battery attachable to and detachable from the electronic apparatus 200. Furthermore, the battery 209 is a chargeable secondary battery.

The system 210 includes a recording unit 211 and an image capture unit 212.

The recording unit 211 records data such as image data and audio data provided from the image capture unit 212 into a recording medium 211a. Furthermore, the recording unit 211 reads out the data such as the image data and the audio data from the recording medium 211a. The recording medium 211a may be a hard disk, a memory card, or the like, and may be built in the electronic apparatus 200 or may be an external recording medium detachably attached to the electronic apparatus 200.

The image capture unit 212 includes an image sensor for generating image data from an optical image of an object, an image processing circuit for performing image processing on the image data generated by the image sensor, a compression and decompression circuit for compressing the image data and decompressing the compressed image data. The image capture unit 212 captures an image of an object, and provides the image data, such as still image data or moving image data, acquired from a result of the image capturing to the recording unit 211. The recording unit 211 records the image data provided from the image capture unit 212 into the recording medium 211a. The image capture unit 212 may further include a configuration required to capture an image of an object.

The system 210 includes a unit to which power is supplied from the regulator 205 while the electronic apparatus 200 is powered on. Therefore, the system 210 may further include a display unit for displaying the image data, and/or a unit for transmitting and receiving an electronic mail in addition to the recording unit 211, the recording medium 211a, and the image capture unit 212.

The operation unit 213 is a user interface for operating the electronic apparatus 200. The operation unit 213 includes a power button for operating the electronic apparatus 200, a mode switching button for switching a mode of the electronic apparatus 200. Each of the buttons is constituted by a switch, a touch panel, or the like. In a case where being operated by the user, the operation unit 213 provides a signal corresponding to the operation performed by the user to the CPU 206. The operation unit 213 may control the electronic apparatus 200 according to a remote signal received from a remote controller.

The timer 214 measures a time regarding a process performed by each of the units of the electronic apparatus 200.

Furthermore, each of the power supply antenna 106 and the power reception antenna 201 may be a helical antenna or a loop antenna, or may be a planar antenna, such as a meander line antenna.

In the first exemplary embodiment, the power supply apparatus 100 is configured to wirelessly supply power to the electronic apparatus 200 based on the magnetic resonance method, but the method for wirelessly supplying power is not limited thereto.

For example, the power supply apparatus 100 may be configured to wirelessly supply power to the electronic apparatus 200 based on electric field coupling, instead of the magnetic resonance method. In this case, an electrode needs to be mounted on each of the power supply apparatus 100 and the electronic apparatus 200, and power is wirelessly supplied from the electrode of the power supply apparatus 100 to the electrode of the electronic apparatus 200.

Alternatively, for example, the power supply apparatus 100 may be configured to wirelessly supply power to the electronic apparatus 200 based on electromagnetic induction, instead of the magnetic resonance method.

The power supply apparatus 100 is configured to wirelessly supply power to the electronic apparatus 200. However, the term "wirelessly" may be replaced with a phrase "in a non-contact manner" or a phrase "in a contactless manner".

### (First Notification Process)

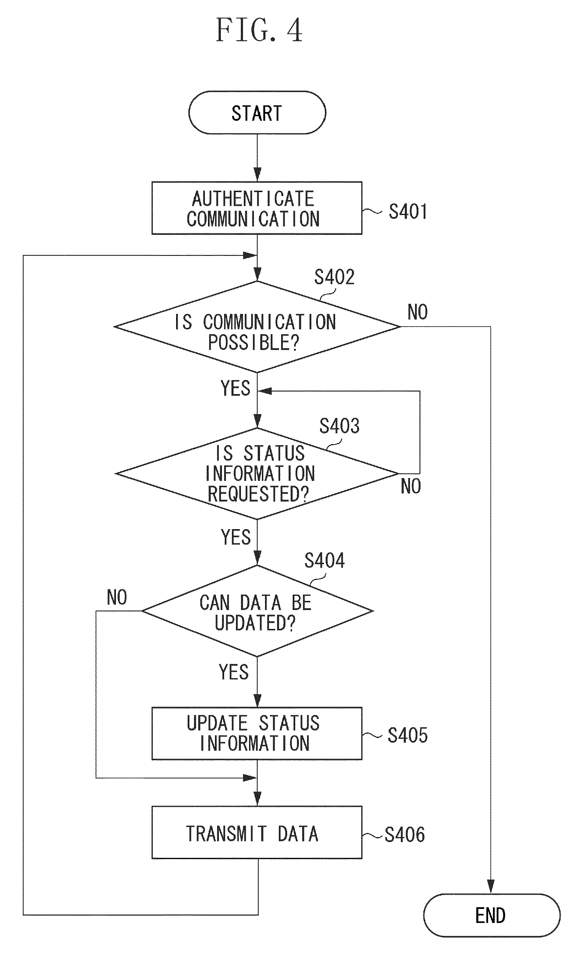

A first notification process performed by the electronic apparatus 200 will be described with reference to a flowchart illustrated in Fig. 4.

In a case where the power reception antenna 201 receives power from the power supply apparatus 100, and power received by the power reception antenna 201 is supplied to the communication unit 204, in step S401, the communication unit 204 carries out authentication for wirelessly communicating with the communication unit 105. After that, the first notification process proceeds to step S402.

In step S402, the communication unit 204 determines whether the communication unit 204 is wirelessly communicable with the communication unit 105. If the communication unit 204 is wirelessly communicable with the communication unit 105 (YES in step S402), the first notification process proceeds to step S403. If the communication unit 204 is wirelessly incommunicable with the communication unit 105 (NO in step S402), the first notification process ends.

If the authentication for wirelessly communicating with the communication unit 105 is completed by the process of step S401, the communication unit 204 becomes wirelessly communicable with the communication unit 105 (YES in step S402). If the authentication for wirelessly communicating with the communication unit 105 is not completed by the process of step S401, the communication unit 204 becomes wirelessly incommunicable with the communication unit 105 (NO in step S402). Furthermore, if the supply of the first power from the power supply apparatus 100 to the electronic apparatus 200 is stopped, the communication unit 204 becomes wirelessly incommunicable with the communication unit 105 (NO in step S402). If the supply of the first power from the power supply apparatus 100 to the electronic apparatus 200 is performed, the communication unit 204 is wirelessly communicable with the communication unit 105 (YES in step S402).

In step S403, the communication unit 204 determines whether data for requesting the status information is received from the power supply apparatus 100. If the data for requesting the status information is received from the power supply apparatus 100 by the communication unit 204 (YES in step S403), the first notification process proceeds to step S404. If the data for requesting the status information is received from the power supply apparatus 100 by the communication unit 204 (YES in step S403), the communication unit 204 outputs, to the CPU 206, a notification for instructing the CPU 206 to update the second data. If the data for requesting the status information is not received from the power supply apparatus 100 by the communication unit 204 (NO in step S403), the first notification process returns to step S403.

In step S404, the CPU 206 determines whether the CPU 206 can update the second data. If the CPU 206 can update the second data (YES in step S404), the first notification process proceeds to step S405. If the CPU 206 cannot update the second data (NO in step S404), the first notification process proceeds to step S406.

If the remaining capacity of the battery 209 is a first predetermined value or larger, the CPU 206 can update the second data with use of power supplied from the battery 209 to the CPU 209 (YES in step S404). If the remaining capacity of the battery 209 is not the first predetermined value or larger, the CPU 206 cannot update the second data (NO in step S404) since power supplied from the battery 209 is insufficient as power to be used to update the second data.

Furthermore, if power received from the power supply apparatus 100 by the power reception antenna 201 is a second predetermined value or higher, the CPU 206 can update the second data with use of power received by the power reception antenna 201 (YES in step S404). If power received from the power supply apparatus 100 by the power reception antenna 201 is not the second predetermined value or higher, the CPU 206 cannot update the second data (NO in step S404) since power received by the power reception antenna 201 is insufficient as power to be used to update the second data.

Furthermore, even when power to be used to update the second data is supplied to the CPU 206, the CPU 206 cannot update the second data (NO in step S404) if an error occurs in the CPU 206. In a case where power to be used to update the second data is supplied to the CPU 206, the CPU 206 can update the second data (YES in step S404), provided that no error occurs in the CPU 206.

In step S405, the CPU 206 updates the second data according to the notification received from the communication unit 204. Furthermore, upon completing the update of the second data, the CPU 206 changes the update data. With this operation, the CPU 206 updates the status information. After the update of the second data is completed and the update data is changed, the update of the status information is completed. Upon the completion of the update of the status information, the first notification process proceeds to step S406.

In step S406, the communication unit 204 transmits the status information stored in the memory 204a as a response to the data for requesting the status information that has been received from the power supply apparatus 100. Then, the first notification process returns to step S402. If the CPU 206 has been able to update the second data (YES in step S404), the communication unit 204 transmits the status information updated by the CPU 206 in step S405 to the power supply apparatus 100. If the CPU 206 has not been able to update the second data (NO in step S404), the communication unit 204 transmits the status information not updated by the CPU 206 to the power supply apparatus 100.

If the CPU 206 has not been able to update the second data (NO in step S404), the communication unit 204 is configured to transmit, in step S406, the status information not updated by the CPU 206 to the power supply apparatus 100. However, the transmission of the status information is not limited thereto. For example, if the CPU 206 has not been able to update the second data (NO in step S404), the communication unit 204 may be configured to transmit, in step S406, the status information including the first data and the update data without including the second data to the power supply apparatus 100.

In the case where the first notification process illustrated in Fig. 4 is performed, the electronic apparatus 200 updates the status information according to a timing at which the status information is requested from the power supply apparatus 100.

### (Second Notification Process)

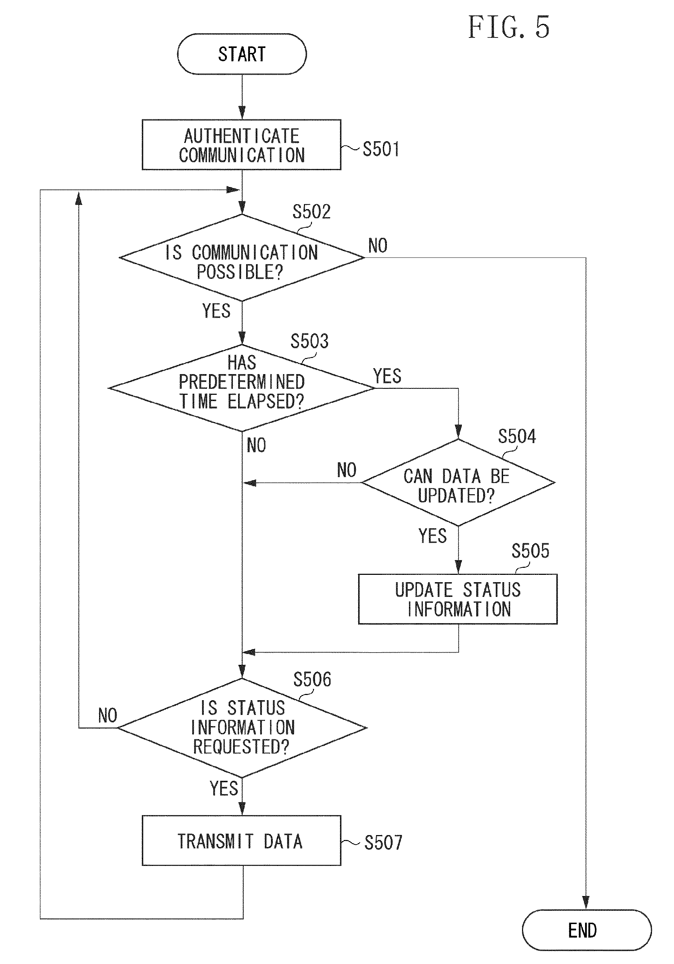

A second notification process performed by the electronic apparatus 200 will be described with reference to a flowchart illustrated in Fig. 5.

The second notification process illustrated in Fig. 5 and the first notification process illustrated in Fig. 4 share some common processes, and a description of such processes will be omitted in the following description. The processes performed in steps S501 and S502 illustrated in Fig. 5 are similar to those performed in steps S401 and S402 illustrated in Fig. 4, whereby a description thereof will be omitted in the following description.

If the communication unit 204 is wirelessly communicable with the communication unit 105 (YES in step S502), the second notification process proceeds to step S503.

In step S503, the CPU 206 determines whether a predetermined time has elapsed. The timer 214 measures a time elapsed since the last update of the status information. Therefore, if the time measured by the timer 214 reaches or exceeds the predetermined time, the CPU 206 determines that the predetermined time has elapsed (YES in step S503). If the time measured by the timer 214 does not reach or exceed the predetermined time, the CPU 206 determines that the predetermined time has not elapsed (NO in step S503). If the predetermined has elapsed (YES in step S503), the second notification process proceeds to step S504. If the predetermined time has not elapsed (NO in step S503), the second notification process proceeds to step S506.

In step S504, the CPU 206 determines whether the CPU 206 can update the second data, similarly to step S404. If the CPU 206 can update the second data (YES in step S504), the second notification process proceeds to step S505. If the CPU 206 cannot update the second data (NO in step S504), the second notification process proceeds to step S506.

In step S505, the CPU 206 updates the second data. Furthermore, upon completing the update of the second data, the CPU 206 changes the update data. After the update of the second data is completed and the update data is changed, the update of the status information is completed. Upon the completion of the update of the status information, the second notification process proceeds to step S506. Upon completing the update of the status information, the CPU 206 controls the timer 214 so as to measure a time elapsed after the process of step S505 is performed, to cause the timer 214 to measure the time elapsed since the last update of the status information.

In step S506, the communication unit 204 determines whether the data for requesting the status information is received from the power supply apparatus 100, similarly to step S403. If the data for requesting the status information is received from the power supply apparatus 100 by the communication unit 204 (YES in step S506), the second notification process proceeds to step S507. If the data for requesting the status information is not received from the power supply apparatus 100 by the communication unit 204 (NO in step S506), the second notification process returns to step S502.

In step S507, the communication unit 204 transmits the status information stored in the memory 204a as the response to the data for requesting the status information that has been received from the power supply apparatus 100. Then, the second notification process returns to step S502. If the CPU 206 has been able to update the second data (YES in step S504), the communication unit 204 transmits the status information updated by the CPU 206 in step S505 to the power supply apparatus 100. If the CPU 206 has not been able to update the second data (NO in step S504), the communication unit 204 transmits the status information non-updated by the CPU 206 to the power supply apparatus 100. If the predetermined time has not elapsed (NO in step S503), the communication unit 204 transmits the status information previously updated by the CPU 206 to the power supply apparatus 100.

If the CPU 206 has not been able to update the second data (NO in step S504), the communication unit 204 is configured to transmit, in step S507, the status information not updated by the CPU 206 to the power supply apparatus 100. However, the transmission of the status information is not limited thereto. For example, if the CPU 206 has not been able to update the second data (NO in step S504), the communication unit 204 may be configured to transmit, in step S507, the status information including the first data and the update data without including the second data to the power supply apparatus 100.

In the case where the second notification process illustrated in Fig. 5 is performed, the electronic apparatus 200 updates the status information according to a predetermined timing at which the predetermined time has elapsed since the update of the status information.

### (Power Supply Process)

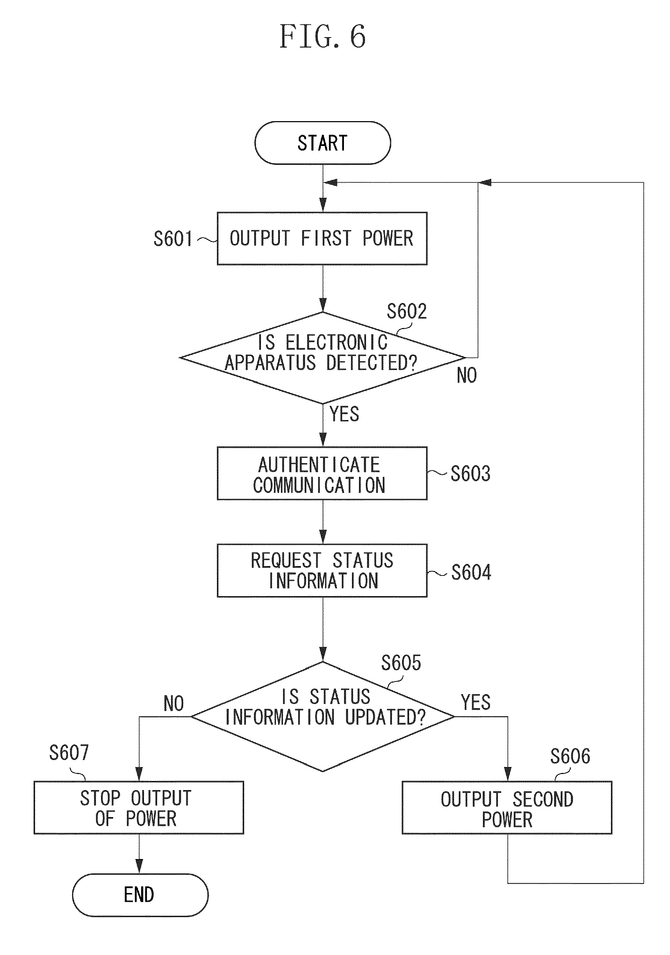

A power supply process performed by the power supply apparatus 100 will be described with reference to a flowchart illustrated in Fig. 6. In a case where the power supply apparatus 100 performs the power supply process, the electronic apparatus 200 performs at least one of the first notification process illustrated in Fig. 4 and the second notification process illustrated in Fig. 5.

In a case where the power supply apparatus 100 is powered on, the CPU 107 performs a process of step S601. In step S601, the CPU 107 controls the oscillator 102, the power generation unit 103, and the matching circuit 104 so as to output the first power to detect whether there is the electronic apparatus 200 within the predetermined range. Upon the output of the first power, the power supply process proceeds to step S602.

In step S602, the CPU 107 determines whether there is the electronic apparatus 200 within the predetermined range with use of the data indicating the VSWR that is provided from the detection unit 112. If the CPU 107 detects that there is the electronic apparatus 200 within the predetermined range (YES in step S602), the power supply process proceeds to step S603. If the CPU 107 does not detect that there is the electronic apparatus 200 within the predetermined range (NO in step S602), the power supply process returns to step S601.

In step S603, the CPU 107 causes the communication unit 105 to carry out the authentication for wirelessly communicating with the communication unit 204. After completion of the authentication for wirelessly communicating with the communication unit 204, the power supply process proceeds to step S604.

In step S604, the CPU 107 controls the communication unit 105 so as to transmit the data for requesting the status information to the electronic apparatus 200. After that, the power supply process proceeds to step S605.

In a case where the status information is received from the electronic apparatus 200 by the communication unit 105, in step S605, the CPU 107 determines whether the status information is updated by the electronic apparatus 200. The CPU 107 analyzes the status information received from the electronic apparatus 200 by the communication unit 105, and determines whether the status information is updated by the electronic apparatus 200 with use of the update data included in the status information.

For example, the CPU 107 records, into the RAM 109, the update data included in the status information acquired from the electronic apparatus 200 for the first time. After that, the CPU 107 determines whether the update data included in the status information acquired from the electronic apparatus 200 for the second time, and the update data acquired for the first time that is recorded in the RAM 109 match each other. In this case, if the update data acquired for the second time, and the update data acquired for the first time that is recorded in the RAM 109 match each other, the CPU 107 determines that the status information is not updated by the electronic apparatus 200 (NO in step S605). On the other hand, if the update data acquired for the second time, and the update data acquired for the first time that is recorded in the RAM 109 do not match each other, the CPU 107 determines that the status information is updated by the electronic apparatus 200 (YES in step S605). More specifically, if the update data acquired for the second time is set to "1", and the update data acquired for the first time that is recorded in the RAM 109 is set to "0", the CPU107 determines that the status information is updated by the electronic apparatus 200 (YES in step S605). Furthermore, if the update data acquired for the second time is set to "0", and the update data acquired for the first time that is recorded in the RAM 109 is set to "1", the CPU 107 determines that the status information is updated by the electronic apparatus 200 (YES in step S605). On the other hand, if the update data acquired for the second time is set to "1", and the update data acquired for the first time that is recorded in the RAM 109 is set to "1", the CPU107 determines that the status information is not updated by the electronic apparatus 200 (NO in step S605). Furthermore, if the update data acquired for the second time is set to "0", and the update data acquired for the first time that is recorded in the RAM 109 is set to "0", the CPU 107 determines that the status information is not updated by the electronic apparatus 200 (NO in step S605). In step S605, if the update data acquired from the electronic apparatus 200 for the N-th time, and the update data acquired from the electronic apparatus 200 for the (N-1)-th time match each other, the CPU 107 determines that the status information is not updated by the electronic apparatus 200 (NO in step S605). In step S605, if the update data acquired from the electronic apparatus 200 for the N-th time, and the update data acquired from the electronic apparatus 200 for the (N-1)-th time do not match each other, the CPU 107 determines that the status information is updated by the electronic apparatus 200 (YES in step S605). The number "N" is an integer. In step S605, if the status information is acquired from the electronic apparatus 200 by the communication unit 105 for the first time, the CPU 107 determines that the status information is updated by the electronic apparatus 200 (YES in step S605).

Furthermore, the update data stored in the RAM 109 is overwritten with the update data included in the status information acquired from the electronic apparatus 200, each time the status information is acquired from the electronic apparatus 200 by the communication unit 105.

If the CPU 107 determines that the status information is updated by the electronic apparatus 200 (YES in step S605), the CPU 107 determines that the status information acquired from the electronic apparatus 200 is correct information, and then the power supply process proceeds to step S606. If the CPU 107 determines that the status information is not updated by the electronic apparatus 200 (NO in step S605), the CPU 107 determines that the status information acquired from the electronic apparatus 200 is not correct information, and then the power supply process proceeds to step S607.

In step S606, the CPU 107 sets a value of the second power and a power supply period during which the second power will be output according to the second data included in the status information acquired from the electronic apparatus 200. Furthermore, the CPU 107 controls the oscillator 102, the power generation unit 103, and the matching circuit 104 so as to output the second power set according to the second data. Furthermore, after the power supply period set according to the second data has elapsed since the start of the output of the second power, the power supply process returns to step S601.

In a case where the second power is output from the power supply apparatus 100, the electronic apparatus 200 causes the charging unit 208 to charge the battery 209 with use of power received by the power reception antenna 201. Furthermore, in a case where the second power is output from the power supply apparatus 100, the electronic apparatus 200 starts up the system 210 with use of power received by the power reception antenna 201.

In step S607, the CPU 107 refrains from using the status information acquired from the electronic apparatus 200, and stops outputting power from the power supply antenna 106. With this operation, the power supply apparatus 100 ends the wireless power supply from the power supply apparatus 100 to the electronic apparatus 200. Upon the stop of power output from the power supply antenna 106, the power supply process ends.

In the power supply process illustrated in Fig. 6, the process of step S603 may be omitted in a case where the communication unit 105 has already completed the authentication for wirelessly communicating with the communication unit 204.

As described above, the electronic apparatus 200 according to the first exemplary embodiment is configured to transmit the update data to the power supply apparatus 100 to notify the power supply apparatus 100 whether the status information regarding the electronic apparatus 200 is updated. Therefore, the electronic apparatus 200 can correctly notify the power supply apparatus 100 of the state of the electronic apparatus 200.

Furthermore, the power supply apparatus 100 can determine whether the status information regarding the electronic apparatus 200 is correct with use of the update data acquired from the electronic apparatus 200. With this method, the power supply apparatus 100 can stop supplying power wirelessly from the power supply apparatus 100 to the electronic apparatus 200 when the status information regarding the electronic apparatus 200 is incorrect, and thus the power supply apparatus 100 can appropriately control power to be supplied wirelessly from the power supply apparatus 100 to the electronic apparatus 200.

In the first exemplary embodiment, the description has been made assuming that the update data is the data of one bit. However, the update data is not limited thereto. For example, the update data may be data constituted by 2 or more bits.

In the first exemplary embodiment, the power supply apparatus 100 and the electronic apparatus 200 are assumed to wirelessly communicate with each other based on the NFC standard. However, the power supply apparatus 100 and the electronic apparatus 200 may wirelessly communicate with each other based on a standard other than the NFC standard. For example, the power supply apparatus 100 and the electronic apparatus 200 may perform wireless communication in compliance with ISO/IEC (International Organization for Standardization/International Electrotechnical Commission) 18092 standard, instead of the NFC standard. Alternatively, the power supply apparatus 100 and the electronic apparatus 200 may perform wireless communication in compliance with Radio Frequency Identification (RFID), instead of the NFC standard. Alternatively, the power supply apparatus 100 and the electronic apparatus 200 may perform wireless communication in compliance with ISO/IEC 14443 standard, instead of the NFC standard. Alternatively, the power supply apparatus 100 and the electronic apparatus 200 may perform wireless communication in compliance with TransferJet (registered trademark) standard, instead of the NFC standard. Alternatively, the power supply apparatus 100 and the electronic apparatus 200 may perform wireless communication in compliance with ISO/IEC 21481 standard, instead of the NFC standard. Alternatively, the power supply apparatus 100 and the electronic apparatus 200 may perform wireless communication in compliance with Bluetooth (registered trademark) standard or wireless LAN (local area network) standard, instead of the NFC standard.

In the first exemplary embodiment, the power supply apparatus 100 is configured to supply the second power to the electronic apparatus 200 with use of the power supply antenna 106, and perform the communication between the communication unit 105 and the electronic apparatus 200 with use of the power supply antenna 106. However, the use of the antenna is not limited thereto. For example, the power supply apparatus 100 may be configured to separately include an antenna for supplying the second power to the electronic apparatus 200, and an antenna for performing the communication between the communication unit 105 and the electronic apparatus 200. Therefore, a resonance frequency corresponding to the antenna for supplying the second power to the electronic apparatus 200, and a resonance frequency corresponding to the antenna for performing the communication between the communication unit 105 and the electronic apparatus 200 may be equal frequencies, or may be different frequencies. In this case, the resonance frequency corresponding to the antenna for supplying the second power to the electronic apparatus 200 may be 6.78 MHz, or may be a frequency of 100 KHz to 250 KHz. The resonance frequency corresponding to the antenna for performing the communication between the communication unit 105 and the electronic apparatus 200 may be a frequency other than 13.56 MHz as long as this frequency is a frequency in compliance with the communication standard of the communication unit 105.

Furthermore, the electronic apparatus 200 is configured to receive power from the power supply apparatus 100 with use of the power reception antenna 201, and perform the communication between the power supply apparatus 100 and the communication unit 204 with use of the power reception antenna 201. However, the use of the antenna is not limited thereto. For example, the electronic apparatus 200 may be configured to separately include an antenna for receiving power from the power supply apparatus 100, and an antenna for performing the communication between the power supply apparatus 100 and the communication unit 204. Therefore, a resonance frequency corresponding to the antenna for receiving power from the power supply apparatus 100, and a resonance frequency corresponding to the antenna for performing the communication between the power supply apparatus 100 and the communication unit 204 may be equal frequencies, or may be different frequencies. In this case, the resonance frequency corresponding to the antenna for receiving power from the power supply apparatus 100 may be 6.78 MHz, or may be a frequency of 100 KHz to 250 KHz. The resonance frequency corresponding to the antenna for performing the communication between the power supply apparatus 100 and the communication unit 204 may be a frequency other than 13.56 MHz as long as this frequency is a frequency in compliance with the communication standard of the communication unit 105.

### Other Exemplary Embodiments

The power supply apparatus according to the present invention is not limited to the power supply apparatus 100 described in the first exemplary embodiment. Furthermore, the electronic apparatus according to the present invention is also not limited to the electronic apparatus 200 described in the first exemplary embodiment. For example, each of the power supply apparatus and the electronic apparatus according to the present invention can also be realized by a system including apparatuses.

Furthermore, various kinds of processes and functions described in the first exemplary embodiment can also be realized by a computer program. In this case, the computer program according to such an exemplary embodiment of the present invention can be executed by a computer (including a CPU), and is configured to realize various kinds of functions described in the first exemplary embodiment.

Needless to say, the computer program according to the present invention may realize various kinds of processes and functions described in the first exemplary embodiment with use of an operating system (OS) and/or the like running on the computer.

The computer program according to the present invention is read out from a computer-readable recording medium to be executed by the computer. A hard disk device, an optical disk, a compact disk read only memory (CD-ROM), a compact disk recordable (CD-R), a memory card, a ROM, or the like can be used as the computer-readable recording medium. These recording media are non-transitory recording media. Alternatively, the computer program according to the present invention may be configured to be provided from an external apparatus to the computer via a communication interface to be executed by the computer.

While the present invention is described with reference to exemplary embodiments, it is to be understood that the present invention is not limited to the exemplary embodiments. The scope of the following claims is to be accorded the broadest interpretation so as to encompass all modifications and equivalent structures.

## Claims

1. An electronic apparatus comprising:
a control means that updates information regarding the electronic apparatus; and
a communication means that transmits, to a power supply apparatus, data for notifying the power supply apparatus whether the electronic apparatus is in a state capable of updating the information regarding the electronic apparatus.

2. The electronic apparatus according to claim 1, further comprising:
a power reception means that wirelessly receives power from the power supply apparatus,
wherein the communication means transmits the data to the power supply apparatus so as to allow the power supply apparatus to control power to be supplied wirelessly from the power supply apparatus to the electronic apparatus.

3. The electronic apparatus according to claim 2, wherein the control means updates the information regarding the electronic apparatus, based on power received by the power reception means, in a case where the electronic apparatus is in a state capable of updating the information regarding the electronic apparatus.

4. The electronic apparatus according to claim 1, wherein the control means updates the information regarding the electronic apparatus, based on a predetermined timing, in a case where the electronic apparatus is in a state capable of updating the information regarding the electronic apparatus.

5. The electronic apparatus according to claim 1, wherein the data is transmitted from the communication means to the power supply apparatus as data in compliance with NDEF (NFC Data Exchange Format).

6. The electronic apparatus according to claim 1, wherein the communication means transmits predetermined data to the power supply apparatus, in a case where the control means is not in a state capable of updating the information regarding the electronic apparatus.

7. A power supply apparatus comprising:
a power supply means that wirelessly supplies power to an electronic apparatus;
a communication means that receives data for notifying the power supply apparatus whether the electronic apparatus is in a state capable of updating information regarding the electronic apparatus; and
a control means that controls, based on the data, power to be supplied from the power supply apparatus to the electronic apparatus.

8. The power supply apparatus according to claim 7, wherein the control means controls the power supply means so as to refrain from wirelessly supplying power from the power supply apparatus to the electronic apparatus, in a case where the electronic apparatus is not in a state capable of updating the information regarding the electronic apparatus.

9. The power supply apparatus according to claim 7, wherein the control means controls, based on information regarding the electronic apparatus that is received by the communication means, power to be supplied from the power supply apparatus to the electronic apparatus, in a case where the electronic apparatus is in a state capable of updating the information regarding the electronic apparatus.
